# EUROPÄISCHE PATENTSCHRIFT

(11) **EP 1 029 489 B1**
(45) Veröffentlichungstag und Bekanntmachung des Hinweises auf die Patenterteilung: **09.11.2005**
(21) Anmeldenummer: 00102069.2
(22) Anmeldetag: 02.02.2000
(51) Int. Cl.: A47J 37/12

(54) **Friteuse**
Fryer
Friteuse

(30) Priorität: 19.02.1999 DE 19907123
(43) Veröffentlichungstag der Anmeldung: 23.08.2000
(73) Patentinhaber: BSH Bosch und Siemens Hausgeräte GmbH, 81739 München (DE)
(72) Erfinder: Reiling, Marco, 75236 Ersingen (DE)

(56) Entgegenhaltungen:
- EP-A- 0 309 770
- EP-A- 0 783 861
- DE-A- 3 719 308
- DE-U- 9 412 140

## Beschreibung

Aus EP 0 309 770 A2 ist eine gattungsgemäße Friteuse bekannt. Die Friteuse weist ein Temperatursteuersystem auf, das eine Temperatur des Garmediums erfasst. Diese Temperatur wird mit einer Schmelzgrenztemperatur verglichen. Ist die erfasste Temperatur kleiner als die Schmelzgrenztemperatur, so erfolgt ein Fettschmelzvorgang. Ist die erfasste Temperatur größer als die Schmelzgrenztemperatur, so erfolgt ein Frittierbetrieb. Aus EP-A-0 783 861 ist eine Friteuse bekannt, bei der zwei Temperatursensoren vorgesehen sind, von denen ein erster Temperatursensor die Temperatur eines Heizkörpers erfasst und ein zweiter Temperatursensor die Temperatur des Garmediums erfasst.

Bekannte Friteusen zum Frittieren, Garen oder Backen von Nahrungsmitteln können nur unter Aufsicht einer Benutzerperson betrieben werden, da Brandgefahr, die Gefahr von starker Rauchentwicklung und starker Geruchsentwicklung und die Gefahr einer Zerstörung des Öles oder einer Zerstörung von in die Friteuse zur Bildung von Fett eingegebenen harten Fettstücken durch Überhitzung besteht. Diese Nachteile bestehen insbesondere dann, wenn in der Friteuse noch kein oder zuwenig Öl enthalten ist und zur Bildung von Öl feste oder harte Fettstücke in die Friteuse gegeben werden.

Durch die Erfindung soll die Aufgabe gelöst werden, die genannten Nachteile zu vermeiden, insbesondere die Brandgefahr, die Gefahr einer starken Rauchentwicklung oder starken Geruchsentwicklung und die Gefahr einer Zerstörung von festem Fett oder Öl durch Überhitzung.

Diese Aufgabe wird gemäß der Erfindung durch die Merkmale von Anspruch 1 gelöst. In dieser Beschreibung werden im folgenden mit dem Begriff "Frittieren" auch "Garen und Backen" gemeint; der Begriff "Öl", soweit nicht anders im Einzelfall definiert, bedeutet jede Art von "flüssigem Öl" einschließlich gegebenenfalls "geschmolzenes flüssiges Fett".

Je nach Ausführungsform der Friteuse ist gemäß der Erfindung entweder ein halbautomatischer Schmelzvorgang oder ein vollautomatischer Schmelzvorgang zum Schmelzen von harten oder festen Fettstücken und zum Schmelzen von hart gewordenem Öl möglich.

Ferner hat die Erfindung den Vorteil, daß eine Benutzerperson schon vor oder zu Beginn eines Schmelzvorganges den "Fritierbetrieb" wählen kann, gemäß einer besonderen Ausführungsform auch eine gewünschte Endtemperatur oder Fritiertemperatur.

Durch die Erfindung ergibt sich ein schonendes Schmelzen von hartem Fett, keine Brandgefahr, kein Rauch und keine Geruchsentwicklung, keine Überhitzung von einem oder mehreren Heizkörpern der Heizung der Friteuse, und keine Überhitzung und Zerstörung des Fettes oder Öls.

Gemäß einer Ausführungsform der Erfindung kann eine Benutzerperson an einem Fettschmelz-Einstellmittel, beispielsweise einer Wippe oder einem anderen manuellen Einstellelement, einen Fettschmelzvorgang wählen und an einem Fritierbetrieb-Einstellelement den Fritierbetrieb wählen, vorzugsweise auch eine gewünschte Heizleistung oder Temperatur wählen. Eine elektronische Steuereinrichtung der Friteuse regelt jetzt, wenn der Fettschmelzvorgang gewählt wird, nicht auf die vorbestimmte oder eingestellte Fritier-Betriebstemperatur, sondern auf eine zum Schmelzen von Fett geeignete Oberflächentemperatur des mindestens einen Heizkörpers der Heizung der Friteuse. Wenn in dem Gefäß der Friteuse, welches das Fett bzw. Öl und das Nahrungsmittel aufnimmt, der Öl-Füllstand durch das geschmolzene Fett ausreichend hoch ist, d.h. der Heizkörper oder die Heizkörper der Heizung vollständig und für einen Fritier-, Gar- oder Backbetrieb ausreichend mit flüssigem Fett bzw. Öl umgeben sind, dann schaltet die elektronische Steuereinrichtung auf normalen Fritierbetrieb um, bei welchem jetzt mit voller Heizleistung der Rest von gegebenenfalls noch vorhandenem harten Fett geschmolzen und das Fett bzw. das Öl auf die eingestellte Betriebstemperatur geregelt wird.

Gemäß einer anderen Ausführungsform der Erfindung kann die Benutzerperson an der Friteuse einen Fettschmelzvorgang wählen. Die Friteuse zeigt dann in einem Display eine Vorschlags-Temperatur an, was beispielsweise die niedrigste Fritiertemperatur sein kann, d.h. die niedrigste auch zum Fritieren, Garen oder Backen von Nahrungsmitteln im Öl geeignete Temperatur. Nach einer kurzen Verzögerungszeit bestätigt eine Steuereinrichtung der Friteuse das Erkennen des gewählten Fettschmelzvorganges. Je nach Ausführungsform der Friteuse bzw. von deren Steuereinrichtung kann der Sollwert für den Fettschmelzvorgang fest vorgegeben sein oder wahlweise von einer Benutzerperson eingestellt werden. Je nach Ausführungsform der Steuereinrichtung können zum Wählen eines Fettschmelzvorganges und gegebenenfalls auch einer Fettschmelztemperatur sowie zum Wählen eines Sollwertes für die Betriebstemperatur zum Fritieren, Garen oder Backen von Nahrungsmitteln getrennte Einstellmittel vorgesehen sein oder diese Funktionen in einem einzigen Einstellelement zusammengefaßt sein, so daß sie durch verschiedenartige Betätigungen des gleichen Einstellelementes auswählbar und vorzugsweise auch einstellbar sind. Nach dem Erkennen des gewählten Fettschmelzvorganges durch die Steuereinrichtung kann von der Benutzerperson an dem genannten Einstellelement der Fritierbetrieb eingestellt werden. Die Steuereinrichtung, welche vorzugsweise eine elektronische Einrichtung ist, regelt jetzt das schonende Schmelzen des Fettes, sowohl für festes Fett in Form von Stücken, welche in das Gefäß der Friteuse eingebracht wurden, als auch für gegebenenfalls bereits eingeschmolzenes, wieder erkaltetes und dadurch hart gewordenes Fett bzw. Öl. Die hierzu nötige Heiztemperatur oder Heizleistung wird automatisch so dosiert, daß die Oberfläche des mindestens einen Heizkörpers der Heizung der Friteuse groß genug zum Schmelzen der Fettstücke, aber kleiner als der Rauchpunkt des Fettes ist. Wenn im Gefäß der Füllstand an flüssigem Öl ausreichend hoch ist, um den Heizkörper oder die Heizkörper vollständig und zum Fritieren, Garen und Backen ausreichend mit flüssigem Öl zu umgeben, dann schaltet die Steuereinrichtung auf "normalen Betrieb" um und regelt jetzt die Fritier-, Gar- oder Backtemperatur.

Die Erfindung wird im folgenden mit Bezug auf die Zeichnungen anhand einer bevorzugten Ausführungsform als Beispiel beschrieben. In den Zeichnungen zeigen
- Fig. 1: ein Verfahrensablaufschema der Friteuse nach der Erfindung und
- Fig. 2: schematisch eine Friteuse nach der Erfindung mit teilweise geschnitten dargestelltem Gefäß.

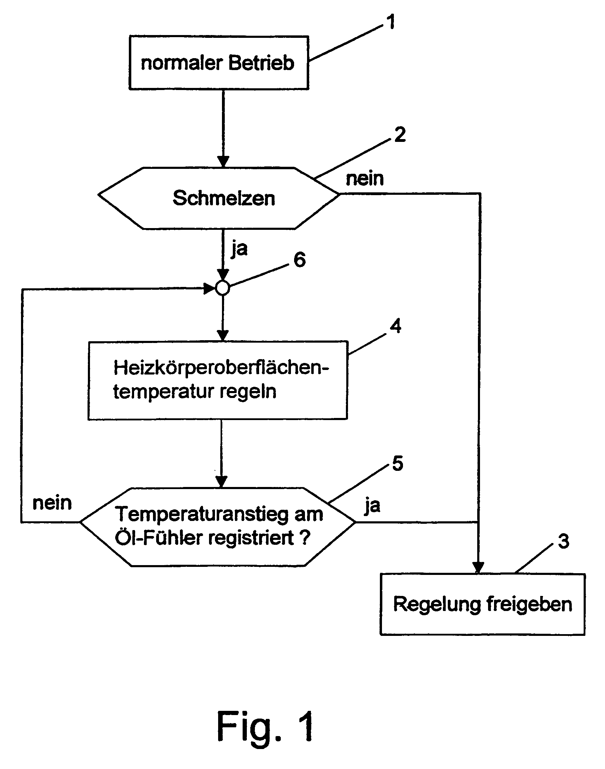

Das in Fig. 1 dargestellte Verfahrensablaufschema der Erfindung enthält folgende Verfahrensschritte:
Schritt 1:
   Manuelles Einschalten der elektrischen Stromversorgung der Friteuse und dadurch Einschalten ihrer Steuereinrichtung auf "normalen Betrieb";
Schritt 2:
   Automatisches Prüfen durch die Steuereinrichtung, ob ein Schmelzvorgang gewählt wurde oder erforderlich ist; falls die Antwort "nein" ist, dann automatisches Freigeben der Regelfunktion der Steuereinrichtung zum Regeln der Heizleistung oder der Temperatur gemäß Schritt 3 zum Fritieren, Garen oder Backen von Nahrungsmitteln in Öl, welches sich in einem Gefäß der Friteuse befindet; falls die Antwort jedoch "ja" ist, dann automatisches Regeln der Temperatur der Friteuse auf einen zum Schmelzen von hartem Fett geeigneten Temperatur-Sollwert, bei welchem keine Brandgefahr besteht und das Fett weder Rauch noch starken Geruch entwickelt gemäß Schritt 4;
**Schritt 5:**
   Überwachen, ob im Öl in dem Gefäß der Friteuse ein vorbestimmter Temperaturanstieg stattfindet; falls die Antwort "nein" ist, dann weiterhin Regeln der Temperatur des mindestens einen Heizkörpers der Heizung auf die zum Schmelzen von Fett geeignete, ebenfalls vorbestimmte Temperatur gemäß einem im Verfahrensablaufschema gezeigten Entscheidungsknoten 6; falls jedoch die Antwort "ja" ist, dann wird automatisch gemäß Schritt 3 die Regelung der Temperatur oder der Heizleistung des mindestens einen Heizkörpers auf den Sollwert für das Fritieren, Garen oder Backen von Nahrungsmitteln in dem flüssigen Öl freigegeben.

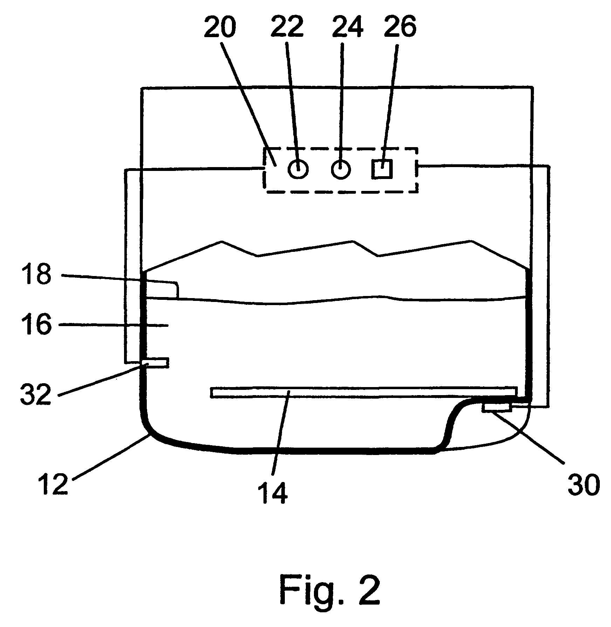

Fig. 2 zeigt eine Friteuse nach der Erfindung mit teilweise im Vertikalschnitt dargestelltem Gefäß 12, in welchem im unteren, mit Öl zu füllenden Bereich mindestens ein Heizkörper 14 einer elektrischen Heizung angeordnet ist. Zum Fritieren, Garen oder Backen von Nahrungsmitteln in Öl, worunter im vorliegenden Fall auch geschmolzenes Fett verstanden wird, muß dieses Öl 16 im Gefäß 12 einen so hohen Flüssigkeitsstand 18 haben, daß nicht nur der Heizkörper 14 vollständig im Öl 16 eingetaucht ist, sondern oberhalb des Heizkörpers 14 auch das Nahrungsmittel in das Öl eingetaucht werden kann. Eine Steuereinrichtung 20 der Friteuse enthält zur Durchführung der vorstehend beschriebenen Verfahren eine Regeleinrichtung mit mindestens einem Mikroprozessor, ein manuell einstellbares Fettschmelz-Einstellelement 22 zum Wählen eines Fettschmelzvorganges, ein manuell einstellbares Fritier-Einstellelement 24 und ein Display 26 zur Anzeige einer Fettschmelz-Solltemperatur als Temperaturvorschlag von der Steuereinrichtung 20, wenn am Fettschmelz-Einstellelement 24 ein Fettschmelzvorgang gewählt wird, und vorzugsweise auch einer Solltemperatur und/oder einer Ist-Temperatur des Heizkörpers und/oder des flüssigen Öls. Vorzugsweise ist die Sollwert-Temperatur für den Fritierbetrieb an dem Fritier-Einstellelement 24 wählbar und variabel einstellbar. Die Funktionen der beiden manuellen Einstellelemente 22 und 24 können in einem einzigen Element kombiniert sein, so daß anstelle von zwei Einstellelementen nur eines erforderlich ist zur Einstellung und zum Wählen der genannten Funktionen und Temperaturwerte. Je nach Ausführungsform kann die von der Heizung 14 zu erzeugende Temperatur durch Regeln von Heizungs-Einschaltzeiten und/oder durch Regeln der Heizleistung geregelt werden.

Die elektrische Stromversorgung der Friteuse wird vorzugsweise am Fritier-Einstellelement 22 eingeschaltet. Daraufhin erfolgt je nach Ausführungsform der Steuereinrichtung 20 automatisch oder nur dann, wenn am Fettschmelz-Einstellelement ein Fettschmelzvorgang gewählt wird, eine Einstellung oder Regelung der Temperatur des mindestens einen Heizelements 14 in Abhängigkeit von einem ersten Temperaturfühler 30, welcher so nahe bei dem mindestens einen Heizkörper 14 angeordnet ist, daß er dessen jeweilige Temperatur sehr schnell erkennen und ein entsprechendes Temperatur-Istwertsignal der Steuereinrichtung 20 mitteilen kann. Dieses Temperatur-lstwertsignal wird von der Steuereinrichtung 20 zur Einstellung oder Regelung der Temperatur des mindestens einen Heizkörpers 14 auf einen Temperaturwert verwendet, welcher festes oder hartes Fett schonend schmilzt, ohne daß Rauch oder starke Geruchsentwicklung durch das schmelzende Fett entsteht.

Der erste Temperatursensor 30 ist vorzugsweise an der Außenseite des Gefäßes 12 an einer Stelle angebracht, wo der mindestens eine Heizkörper 14 an der Gefäßwand anliegt oder einen nur so kleinen Abstand hat, daß gegebenenfalls dazwischen vorhandenes Öl die Temperaturübertragung von dem Heizkörper 14 zum ersten Temperatursensor 30 nur unwesentlich beeinflußt.

Ein zweiter Temperatursensor 32 ist mit so großem Abstand und soviel höher als der mindestens eine Heizkörper 14 angeordnet, daß er die Temperatur des Öls 16 messen und ein entsprechendes Signal der Steuereinrichtung 20 mitteilen kann, wenn flüssiges Öl 16 im Gefäß 12 den mindestens einen Heizkörper 14 vollständig umgibt und das Öl-Niveau 18 so hoch ist, daß Öl an der Öloberfläche durch die Temperatur des Heizkörpers 14 nicht verbrennen kann. Der Abstand zwischen dem zweiten Temperatursensor 32 und dem mindestens einen Heizkörper 14 ist mindestens über eine wesentliche Strecke durch den das Öl aufnehmenden Innenraum des Gefäßes 12 gebildet, damit der zweite Temperatursensor 32 nicht die Temperatur des Heizkörpers 14, sondern die Temperatur des Öls mißt. Wenn der zweite Temperatursensor 32 innerhalb einer vorbestimmten Zeit nach dem Einschalten der Heizung einen vorbestimmten Temperaturanstieg erkennt, schaltet die Steuereinrichtung 20 auf normalen Betrieb und sie regelt die Temperatur für einen normalen Fritier- Gar oder Backvorgang.

## Patentansprüche

1. Friteuse zum Frittieren, Garen oder Backen von Nahrungsmitteln in Öl in einem Gefäß (12) mit mindestens einem Heizkörper (14) zur Erhitzung des Öls für den Frittierbetrieb, und mit einer Steuereinrichtung (20) mit einem manuell betätigbaren Frittier-Einstellmittel (24) zum Wählen des Frittierbetriebs und einem Fettschmelz-Einstellmittel (22) zum Wählen eines Fettschmelzvorgangs, der unabhängig von der Wahl des Frittierbetriebs wählbar ist und umgekehrt, welche Steuereinrichtung (20) im Fettschmelzvorgang die Oberflächentemperatur des Heizkörpers (14) auf einen zum Schmelzen von Fett ohne Fettverbrennung geeigneten Temperaturwert einstellt, und den Fettschmelzvorgang automatisch auf den Frittierbetrieb umschaltet, wenn eine Temperatur-Sensorvorrichtung (30, 32) eine vorbestimmte Temperatursituation von Öl in dem Gefäß (12) erfasst, **dadurch gekennzeichnet, dass** die Temperatur-Sensorvorrichtung einen ersten Temperatur-Sensor (32), der für die Regelung der Öltemperatur als Temperatur-Istwert-Geber mit wesentlichem Abstand von dem Heizkörper (14) an einer Stelle angeordnet ist, die höher als der Heizkörper liegt, und einen zweiten Temperatursensor (30) aufweist, der für die Regelung der Oberflächentemperatur des Heizkörpers (14) im Fettschmelzvorgang in dessen dichter Nähe als Temperatur-Istwert-Geber angeordnet ist, wobei der erste Temperatursensor (32) mindestens teilweise in dem Innenraum des Gefäßes (12) in dem das Öl aufzunehmenden Bereich angeordnet ist.

2. Friteuse nach Anspruch 1, **dadurch gekennzeichnet, dass** der zweite Temperatursensor (30) nahe oder berührend an der Außenseite und der mindestens eine Heizkörper (14) nahe oder berührend an der Innenseite der Wand des Gefäßes (12) angeordnet sind.

3. Friteuse nach einem der vorhergehenden Ansprüche, **dadurch gekennzeichnet, dass** die Steuereinrichtung (20) ein Anzeigegerät (26) aufweist, welches nach dem Wählen eines Schmelzvorganges einen Temperaturvorschlag für den Schmelzvorgang in einer von einer Benutzerperson erkennbaren Weise anzeigt.

4. Friteuse nach Anspruch 3, **dadurch gekennzeichnet, dass** die Steuereinrichtung (20) Mittel aufweist, durch welche sie nach einer kurzen Zeitdauer nach dem Wählen des Schmelzvorganges automatisch die von ihr vorgeschlagene Temperatur bestätigt.

5. Friteuse nach einem der vorhergehenden Ansprüche, **dadurch gekennzeichnet, dass** die genannte Temperatursituation ein vorbestimmter Temperaturwert ist.

6. Friteuse nach einem der vorhergehenden Ansprüche, **dadurch gekennzeichnet, dass** die genannte Temperatursituation eine vorbestimmte Temperaturänderung ist.

## Claims

1. Fryer for frying, cooking or baking foodstuffs in oil in a vessel (12) with at least one heating body (14) for heating the oil for the frying operation, and with a control device (20) with a manually actuable frying setting means (24) for selecting the frying operation and a fat melting setting means (22) for selecting a fat melting process, which is selectable independently of the selection of the frying operation and conversely, which control device (20) in the fat melting process sets the surface temperature of the heating body (14) to a temperature value suitable for melting fat without burning the fat and automatically switches the fat melting process over to frying operation when a temperature sensor device (30, 32) detects a predetermined temperature situation of oil in the vessel (12), **characterised in that** the temperature sensor device comprises a first temperature sensor (32), which for regulation of the oil temperature is arranged as a temperature actual value transmitter with a substantial spacing from the heating body (14) at a location higher than the heating body, and a second temperature sensor (30), which for regulation of the surface temperature of the heating body (14) in the fat melting process is arranged in closer proximity thereto than the temperature actual value transmitter, wherein the first temperature sensor (32) is arranged at least partly in the interior space of the vessel (12) in the region for receiving the oil.

2. Fryer according to claim 1, **characterised in that** the second temperature sensor (30) is arranged adjacent to or contacting the outer side of the wall of the vessel (12) and the at least one heating body (14) is arranged adjacent to or contacting the inner side of the wall of the vessel (12).

3. Fryer according to one of the preceding claims, **characterised in that** the control device (20) comprises an indicating apparatus (26) which after selection of a melting process indicates a temperature proposal for the melting process in a manner recognisable by a user.

4. Fryer according to claim 3, **characterised in that** the control device (20) comprises means by which it automatically confirms the temperature proposed by it a short period of time after selection of the melting process.

5. Fryer according to one of the preceding claims, **characterised in that** the said temperature situation is a predetermined temperature value.

6. Fryer according to one of the preceding claims, **characterised in that** the said temperature situation is a predetermined temperature change.

## Revendications

1. Friteuse pour faire frire ou cuire des aliments dans de l'huile dans un récipient (12) avec au moins un corps de chauffage (14) pour chauffer l'huile en vue du mode de friture et avec un dispositif de commande (20) comportant un moyen de réglage de friture (24) actionnable manuellement pour choisir le mode de friture et un moyen de réglage de fusion de graisse (22) pour choisir une opération de fusion de graisse, qui peut être choisie indépendamment du choix du mode de friture et inversement, lequel dispositif de commande (20) règle dans l'opération de fusion de graisse la température de surface du corps de chauffage (14) sur une valeur de température convenant à la fusion de la graisse sans combustion de celle-ci et bascule automatiquement de l'opération de fusion de graisse au mode de friture lorsqu'un dispositif capteur de température (30, 32) détecte une condition de température prédéfinie de l'huile dans le récipient (12), **caractérisée en ce que** le dispositif capteur de température comporte un premier capteur de température (32) qui est placé en tant que transmetteur de valeur réelle de température à une distance substantielle du corps de chauffage (14) à un endroit qui est plus haut que le corps de chauffage en vue de la régulation de la température de l'huile et un deuxième capteur de température (30) qui est placé en tant que transmetteur de valeur réelle de température très près du corps de chauffage en vue de la régulation de la température de surface du corps de chauffage (14) dans l'opération de fusion de graisse, le premier capteur de température (32) étant placé au moins en partie dans l'espace intérieur du récipient (12) dans la partie recevant l'huile.

2. Friteuse selon la revendication 1, **caractérisée en ce que** le deuxième capteur de température (30) est placé près de ou en contact avec le côté extérieur de la paroi du récipient (12) et l'au moins un corps de chauffage (14) est placé près de ou en contact avec le côté intérieur de ladite paroi.

3. Friteuse selon l'une des revendications précédentes, **caractérisée en ce que** le dispositif de commande (20) comporte un appareil d'affichage (26) qui indique, après le choix d'une opération de fusion, une proposition de température pour l'opération de fusion sous une forme reconnaissable par un utilisateur.

4. Friteuse selon la revendication 3, **caractérisée en ce que** le dispositif de commande (20) comporte des moyens par lesquels il confirme automatiquement, peu de temps après le choix de l'opération de fusion, la température qu'il a proposée.

5. Friteuse selon l'une des revendications précédentes, **caractérisée en ce que** la condition de température mentionnée est une valeur de température prédéfinie.

6. Friteuse selon l'une des revendications précédentes, **caractérisée en ce que** la condition de température mentionnée est une variation de température prédéfinie.
